# EUROPÄISCHE PATENTSCHRIFT

(11) **EP 0 403 858 B1**
(45) Veröffentlichungstag und Bekanntmachung des Hinweises auf die Patenterteilung: **15.12.1993**
(21) Anmeldenummer: 90110420.8
(22) Anmeldetag: 01.06.1990
(51) Int. Cl.: B23K 9/00, B23K 26/00, F42B 3/103

(54) **Elektrische Zündelemente**
Electric ignition elements
Eléments électriques d' allumage

(30) Priorität: 22.06.1989 DE 3920402
(43) Veröffentlichungstag der Anmeldung: 27.12.1990
(73) Patentinhaber: Dynamit Nobel Aktiengesellschaft, 53839 Troisdorf (DE)
(72) Erfinder: Bender, Richard, Dr., D-8560 Lauf (DE); Bretfeld, Anton, D-8510 Fürth (DE)

(56) Entgegenhaltungen:
- DE-A- 3 416 735
- US-A- 4 629 861
- PATENT ABSTRACTS OF JAPAN Band 8, Nr.0216 (M-329)(1653), 3 Oktober 1984 & JP-A-59101282 (MITSUBISHI JUKOGYO K.K.)

## Beschreibung

Die Erfindung richtet sich auf ein Zündelement mit einer zylindrischen Kapsel, die einen Zündsatz enthält und mit einer Folie abgedeckt ist.

Aus der DE 34 16 735-A1 ist ein Zündelement bekannt, bei dem ein Zündsatz in einer Kapsel auf einer Montagehülse mit einer Kappe verschlossen ist. Bei der Fertigung wird das Laserschweißverfahren eingesetzt, aber auch bei diesem hochpräzisen Verfahren ist es schwierig, eine gasdichte Verbindung der Kappe, vor allem wenn sie folienartig dünn ist, mit der massiveren Hülse zu erreichen. Ein direktes, dichtes Aufschweißen einer Folie auf der ebenen Ringfläche des Gehäuses ist nicht möglich, weil dabei Löcher in die Folie gebrannt werden; daher wird die Folie in Form einer Kappe vorverformt und über den Rand der Kapsel gezogen und außen auf der zylindrischen Mantelfläche der Hülse verschweißt. Aber auch bei diesem Verbindungsverfahren ist nicht ganz auszuschließen, daß an manchen Punkten die Folie zu sehr aufgeschmolzen wird, was eine Undichtigkeit in der Abdeckung zur Folge hat.

Da zerstörungsfreie Prüfungen zur Dichtigkeit einer solchen Abdeckung auf der Kapsel eines Zündelementes sehr aufwendig sind, ist es die Aufgabe der Erfindung, das gattungsgemäße Zündelement so auszubilden, daß mit größerer Sicherheit eine gasdichte Verbindung erreicht wird.

Das erfindungsgemäße Zündelement ist dadurch gekennzeichnet, daß die zylindrische Kapsel durch ein Rohrstück, ähnlich oder gleich der zylindrischen Kapsel, verlängert ist, zwischen Kapsel und Rohrstück die Folie eingelegt ist, Kapsel und Rohrstück nicht im gesamten Wanddickequerschnitt sondern nur an ihren Außenseiten verschweißt sind, d.h. daß die Wurzel der Naht nirgends bis zur Innenwand von Kapsel und Rohrstück reicht. Weitere vorteilhafte Ausgestaltungen sind in den Unteransprüchen beschrieben.

Die Schweißnaht an der Außenseite des Hohlkörpers (Teil I) bzw. Rohres liegt genau in Höhe der Folie. Teil I muß als Auflagefläche für die Folie geeignet sein. Der Deckelkörper (Teil II) ist die auf Teil I bezogene "Fortsetzung" des rohrartigen Hohlkörperbereichs, d.h. normalerweise auch ein Rohrstück mit einer ebenen Endfläche, wobei die Abmessungen wie auch die übrigen Materialeigenschaften von Teil I und Teil II aufeinander abgestimmt sein müssen; bevorzugt sind sie gleich. Die üblicherweise V-förmige Schweißnaht, durch die die beiden Teile von außen her miteinander verbunden werden, darf nicht über die gesamte Wanddicke gehen, d.h. es wird bewußt nicht "durchgeschweißt"; man strebt eine Naht mit überall zurückgefallener Wurzel an. Wo die Wurzel in dem von Teil I und Teil II gebildeten Spalt genau liegt, ist nicht kritisch; ob 60 % oder 65 % der Querschnitte der Teile I und II durch eine Schweißnaht miteinander verbunden sind, ist für die Festigkeit ohne Bedeutung, da der Deckelkörper, meist ein kurzes Rohrstück (üblicherweise im Bereich von einigen Millimetern Länge), minimal belastet wird. Für die Dicktigkeit und zur Befestigung der Folie reicht aber das Aufschmelzen des Werkstoffes am Rand völlig aus, wodurch die Folie zwischen den beiden Teilen vollständig "einklebt". Sind einmal die optimalen Werte durch Vorversuche für die Verbindung der beiden Teile bekannt, so ist, insbesondere beim Laserschweißen, die Dichtheit der Abdeckung der Folie auf dem Teil I automatisch sichergestellt.

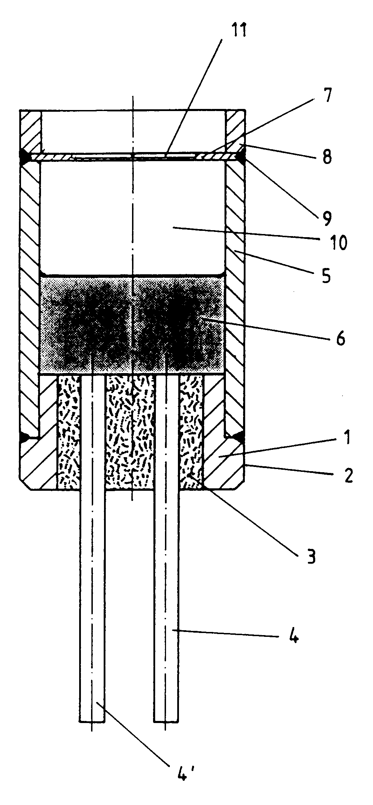

Ein Verfahren ist im folgenden für die Herstellung lasergeschweißter Zündelemente weiter beispielhaft erläutert; die Figur zeigt im Längsschnitt ein Zündelement, das von vorne geladen wird, mit einer erfindungsgemäß vorn angeschweißten Abdeckfolie.

Der grundsätzliche Aufbau eines solchen Zündelementes ist aus der DE 34 16 735-A1 bekannt. Eine Montagehülse 1, vorzugsweise aus Stahl, mit einem Anschlußflansch 2 umgibt einen Isolierkörper 3, der eine nicht dargestellte Dünnfilmzündbrücke trägt, die über die beiden Polstifte 4, 4' mit elektrischer Energie beaufschlagt werden kann. Die Verbindung der Hülse 1 und der Polstifte 4, 4' mit dem Isolierkörper 3, vorzugsweise aus Keramik, muß auch nach zahlreichen Temperaturwechseln gasdicht bleiben; diese Verbindungstechnik wird beherrscht, beispielsweise durch Hartlöten an den zuvor metallisierten Dichtflächen oder durch Einbetten in Glaslot.

An die Montagehülse 1 ist eine zylindrische Hülse 5 angeschweißt. Bei einem solchen Aufbau eines Zündelementes kann der Zündsatz 6 sehr präzise auf die Zündbrücke auf dem Isolierkörper 3 gepreßt werden. Dieses vorteilhafte, sehr einfache und genaue Herstellungsverfahren läßt sich einsetzen, weil gemäß der Erfindung die Abdeckung des Zündsatzes jetzt auch einwandfrei möglich ist. Das vordere plane Ende der Hülse 5 wird mit einer 0,1 bis 0,35 mm dicken Stahlfolie 7 abgedeckt; auf den Rand wird ein weiteres Rohrstück (ringartiges Haltelement) 8 aus demselben Material und mit den gleichen Abmessungen und Eigenschaften wie die Hülse 5 gesetzt; die Folie 7 ist sandwichartig zwischen das Rohr 5 und das Rohrstück 8 eingeklemmt. Beim Legen einer Naht 9 durch Laserschweißen werden die Hülse 5 und das Rohrstück 8 miteinander verbunden, und die Folie 7 verbindet sich im Randbereich so mit der Naht 9, daß der Raum 10 über der Ladung 6 gas- und wasserdicht abgeschlossen ist. Bei diesem Verfahren darf nicht "durchgeschweißt" werden; die Nahtwurzel liegt überall innerhalb des "Spaltes", der von den beiden sich gegenüberliegenden planen Enden der Kapsel 5 und des Halteringes 8 gebildet wird. Bei dieser Nahtbildung wird das Einbrennen von Löchern in die Folie mit Sicherheit vermieden. Das Maß des Durchschweißens der Naht läßt sich beim Laserschweißen sehr einfach einhalten. Die Wanddicke der Kapsel liegt bei etwa 0,5 bis 1,0 mm und die Festigkeit der Verbindung zwischen Rohr 5 und dem Ring 8 ist auch ausreichend, wenn nur 30 % oder 50 % des Wandquerschnitts durch die Schweißnaht miteinander verbunden sind.

Die lasergeschweißte Naht 9 liegt immer in Höhe der Abdeckfolie 7; man hat es bei diesem Verfahren in der Hand, wie weit die Folie 7 über dem Satz 6 angebracht sein soll. Ein Zwischenraum 10 zwischen Folie 7 und Satz 6 ergibt noch größere Sicherheit vor einem Entzünden des Satzes 6 beim Schweißen.

Innerhalb der Folie 7 kann - falls erforderlich - durch Abprägen oder Einprägen eines Sternes 11 eine Sollbruchstelle erzeugt werden. Bei ausreichender Kontrolle des Schweißverfahrens hat sich herausgestellt, daß die Folie 7 den Zündsatz 6 immer dicht abdeckt und diesbezüglich zusätzliche Prüfungen überflüssig sind.

## Patentansprüche

1. Zündelement mit einer zylindrischen Kapsel (5), die einen Zündsatz (6) enthält und mit einer Folie (7) abgedeckt ist, **dadurch gekennzeichnet,** daß die zylindrische Kapsel (5) durch ein Rohrstück (8), ähnlich oder gleich der zylindrischen Kapsel (5), verlängert ist, wobei das plane Ende des Rohrstückes (8) in seiner Kontur mit der Kontur des planen Endes der Kapsel (5) übereinstimmt, zwischen Kapsel (5) und Rohrstück (8) die Folie (7) eingelegt ist, Kapsel (5) und Rohrstück (8) nicht im gesamten Wanddickenquerschnitt, sondern nur an ihren Außenseite verschweißt sind, derart, daß die Wurzel der von außen gelegten Naht (9) über den gesamten Umfang nirgends bis zur Innenwand von Kapsel (5) und Rohrstück (8) reicht.

2. Zündelement nach Anspruch 1, **dadurch gekennzeichnet,** daß die Naht (9) lasergeschweißt ist.

3. Zündelement nach Anspruch 1 oder 2, **dadurch gekennzeichnet,** daß die Kapsel (5) über den Zündsatz (6) übersteht und dadurch zwischen Folie (7) und Zündsatz (6) ein freier Raum (10) vorhanden ist.

## Claims

1. An ignition element with a cylindrical case (5) which contains a priming charge (6) and is covered by a foil (7), characterized in that the cylindrical case (5) is lengthened by a tubular piece (8), similar or identical to the cylindrical case (5), wherein the plane end of the tubular piece (8) corresponds in its contour with the contour of the plane end of the case (5), the foil (7) is inserted between the case (5) and the tubular piece (8), the case (5) and tubular piece (8) are not welded in the whole wall thickness cross-section but only on their outer sides, so that the root of the seam (9), deposited from outside, does not reach the inner wall of the case (5) and the tubular piece (8) at any point over the whole circumference.

2. An ignition element according to claim 1, characterised in that the seam (9) is laser-welded.

3. An ignition element according to claim 1 or 2, characterised in that the case (5) projects over the initiator (6) and as a result a free chamber (10) exists between the foil (7) and the initiator (6).

## Revendications

1. Détonateur comportant une capsule (5) cylindrique qui contient une charge d'allumage (6) et est recouverte par un film (7), caractérisé par le fait que la capsule (5) cylindrique est prolongée par un morceau de tube (8) semblable ou identique à la capsule (5) cylindrique, la forme de l'extrémité plane du morceau de tube (8) correspondant à celle de l'extrémité plane de la capsule (5), par le fait que le film (7) est placé entre la capsule (5) et le morceau de tube (8), par le fait que la capsule (5) et le morceau de tube (8) ne sont pas soudés sur la totalité de la section en épaisseur de la paroi mais seulement au niveau de leur face extérieure, de manière telle que la racine du cordon de soudure (9) appliqué de l'extérieur n'atteigne en aucun point la paroi intérieur de la capsule (5) et du morceau de tube (8).

2. Détonateur selon la revendication 1, caractérisé par le fait que le cordon de soudure (9) est réalisé par soudage au laser.

3. Détonateur selon la revendication 1 ou 2, caractérisé par le fait que la capsule (5) s'étend au-delà de la charge d'allumage (6) et qu'il existe ainsi un espace libre (10) entre le film (7) et la charge d'allumage (6).
